# DEMANDE DE BREVET EUROPEEN

(11) **EP 4 765 743 A1**
(43) Date de publication de la demande: **24.06.2026**
(21) Numéro de dépôt: 25223323.4
(22) Date de dépôt: 15.12.2025
(51) Int. Cl.: H04L 12/66, H04W 28/02, H04W 52/02

(54) **PROCÉDÉ DE GESTION DE LA CONSOMMATION D'ÉNERGIE D'INTERFACES DE COMMUNICATION SANS FIL D'UN DISPOSITIF ÉLECTRONIQUE POINT D'ACCÈS, DISPOSITIF ÉLECTRONIQUE POINT D'ACCÈS ET PROGRAMME D'ORDINATEUR CORRESPONDANT**

(30) Priorité: 17.12.2024 FR 2414360
(71) Demandeur: SAGEMCOM BROADBAND SAS, 92270 Bois-Colombes (FR)
(72) Inventeur: LALAM, Massinissa, 92270 BOIS-COLOMBES (FR)
(74) Mandataire: Cabinet Le Guen Maillet

(57) **Abrégé**

La présente divulgation concerne un procédé de gestion d'une consommation d'énergie d'une passerelle réseau comprenant au moins une interface de communication à un réseau de communication local. Le procédé de gestion comprend : sur détection (401) d'une congestion, déterminer (402) si au moins une station y est connectée, et si au moins une station est connectée, alors détecter (403, 405) un premier flux de communication *via* ladite interface de communication, entre le réseau étendu et ledit réseau local, d'une part, et un deuxième flux de communication entre plusieurs stations connectées au réseau local, d'autre part, puis : en présence d'un premier flux de communication, ou en présence d'un deuxième flux de communication et dont un débit est inférieur à un premier seuil prédéterminé, modifier (406) une configuration initiale de l'interface de communication considérée pour diminuer sa consommation d'énergie, et sinon, maintenir sa configuration initiale.

## Description

### DOMAINE TECHNIQUE

La présente divulgation concerne le domaine des réseaux de communication, et en particulier les réseaux de communication locaux sans fil. De tels réseaux de communication locaux sans fil comprennent généralement un ou plusieurs dispositifs électroniques de type point d'accès (« *Access Point* » en anglais ou « AP »), tels que des passerelles de réseau de communication. Plus particulièrement, la présente divulgation concerne la gestion de la consommation d'énergie de ces passerelles de réseau de communication et en particulier des interfaces de communication à un réseau de communication local, de ces passerelles.

### ETAT DE LA TECHNIQUE ANTERIEURE

Dans un environnement résidentiel ou professionnel, un dispositif électronique dit « point d'accès » (« *Access Point »* en anglais, ou « AP ») est typiquement une passerelle de réseau de communication (« *gateway* » en anglais), ou passerelle réseau, par exemple une « box » fournie par un opérateur Internet. Généralement, un tel dispositif électronique point d'accès comprend a minima une interface de communication sans fil ou interface radio ou ressource radio (ces termes étant utilisés indistinctement par la suite), permettant l'établissement de communications locales de type sans fil conformément, par exemple, à l'une des normes de la famille des standards 802.11 de l'« *Institute of Electrical and Electronics Engineers* » (connue sous l'acronyme « IEEE »), ou réseaux dits de type « Wi-Fi ». Les termes « interface de communication sans fil » ou « ressource radio » ou « interface radio » désignent ici une interface physique électronique configurée pour opérer des communications sans fil bidirectionnelles entre une ou des stations distantes compatibles et un réseau de communication local ou étendu, par exemple selon un protocole de la famille des standards 802.11 de l'IEEE et/ou entre les stations.

De telles stations sont, par exemple, des dispositifs utilisateurs tels que : ordinateurs, télévisions, tablettes ou téléphones dits « intelligents » (ou « *smartphone* » en anglais), etc. ou bien d'autres dispositifs électroniques de type points d'accès tels que des équipements électroniques formant un système d'extension de couverture de communication sans fil (e.g., extender Wi-Fi, répéteur sans-fil...).

De nos jours, de plus en plus de bandes de fréquence sont utilisées dans le cadre de communications sans fil afin de répondre au besoin croissant de consommation de données. En général, par défaut, toutes les interfaces radios sont allumées, qu'il y ait ou non des stations connectées sur l'une d'entre elles. En conséquent, la multiplication d'interfaces radios au sein de la passerelle réseau, pose un réel problème de consommation d'énergie de celle-ci. Il est à noter que les interfaces radios opérant à 5 GHz ou 6 GHz sont particulièrement gourmandes en énergie électrique.

Classiquement une solution pour réduire la consommation d'énergie d'une interface radio est de la conserver allumée, mais dans un mode dégradé (e.g., plusieurs chaînes de transmission/réception sont éteintes). Il est ainsi possible de réduire la consommation d'énergie de l'interface radio tout en conservant sa capacité à détecter les demandes de connexion des stations. L'inconvénient de cette approche est qu'il est certes possible de réduire la consommation d'énergie globale de la passerelle réseau (en particulier si l'interface radio opère à 5 GHz ou 6 GHz), mais ces économies d'énergie ne se font alors essentiellement que lorsqu'aucune station n'est connectée aux interfaces radios de la passerelle réseau (condition typique de déclenchement d'un tel mécanisme).

Il est alors souhaitable de pallier cet inconvénient de l'état de la technique. En particulier, il existe un besoin d'améliorer la consommation d'énergie électrique de la passerelle réseau.

### EXPOSE

Il est notamment souhaitable de fournir une solution qui permette de profiter d'un phénomène de congestion ayant lieu sur une liaison entre un dispositif électronique point d'accès de type passerelle réseau et un réseau de communication étendu, pour économiser de l'énergie au niveau de ses interfaces de communication à un réseau de communication local.

A ces fins, il est proposé ici un procédé de gestion d'une consommation d'énergie d'une passerelle réseau comprenant au moins une première interface de communication avec un réseau de communication étendu et au moins une deuxième interface de communication à un réseau de communication local. Ce procédé de gestion comprend : sur détection d'une congestion de ladite première interface de communication, déterminer, pour chaque deuxième interface de communication, si au moins une station est connectée à ladite deuxième interface de communication considérée, et pour ladite deuxième interface de communication considérée à laquelle au moins une station est connectée, détecter un premier flux de communication *via* ladite deuxième interface de communication considérée, entre ledit réseau étendu et ledit réseau local, d'une part, et un deuxième flux de communication, *via* ladite deuxième interface de communication considérée, entre plusieurs stations connectées audit réseau local, d'autre part, puis : soit en présence d'un premier flux de communication *via* ladite deuxième interface de communication considérée, entre ledit réseau étendu et ledit réseau local, ou soit en présence d'un deuxième flux de communication, *via* ladite deuxième interface de communication considérée, entre plusieurs stations connectées audit réseau local, et si le débit dudit deuxième flux de communication est inférieur à un seuil prédéterminé de débit (S1), alors modifier une configuration initiale de ladite deuxième interface de communication considérée pour diminuer sa consommation d'énergie, et sinon, maintenir sa configuration initiale.

Ainsi, il est possible de tirer avantage d'un phénomène de congestion d'une interface de communication d'une passerelle réseau, configurée pour permettre une communication bidirectionnelle entre la passerelle réseau et un réseau de communication étendu de type WAN (« *Wide Area Network »* en anglais). En particulier, il est possible de profiter de ce phénomène de congestion, pour réduire la consommation d'énergie des interfaces de communication de type interface radio, de la passerelle réseau, configurées pour permettre l'accès à un ou plusieurs réseaux de communication locaux LAN (« *Local Area Network* » en anglais). En effet, puisque l'interface de communication de la passerelle réseau avec le réseau étendu est limitée en raison d'une congestion, il n'est alors pas nécessaire de faire fonctionner les interfaces de communication radios de la passerelle avec un réseau de communication local au maximum de leur capacité de communication lorsque ces dernières font transiter des flux entre le réseau local et le réseau étendu.

Dans un mode de réalisation particulier, le procédé comprend en outre : effectuer une action de gestion d'une consommation d'énergie de ladite deuxième interface de communication considérée, lorsqu'aucune station n'est connectée à ladite deuxième interface de communication considérée.

Selon un mode de réalisation particulier, effectuer ladite action de gestion d'une consommation d'énergie de ladite deuxième interface de communication considérée comprend : éteindre ladite deuxième interface de communication considérée.

Selon un mode de réalisation particulier, le procédé de gestion comprend en outre : lorsque ladite configuration de ladite deuxième interface de communication considérée a été modifiée, alors vérifier si ladite congestion est toujours détectée, et lorsque ladite congestion est toujours détectée, déterminer si une utilisation d'un temps d'antenne par ladite deuxième interface de communication considérée est supérieure ou égale à un seuil prédéterminé de temps d'antenne, et lorsque ladite utilisation du temps d'antenne par ladite deuxième interface de communication considérée est supérieure ou égale au seuil prédéterminé de temps d'antenne, alors restaurer ladite configuration initiale de ladite deuxième interface de communication considérée.

Avantageusement, si les capacités de communication d'une interface de communication avec un réseau de communication local de la passerelle réseau sont réduites et qu'une utilisation du temps d'antenne (i.e., temps pris pour transmettre et recevoir des informations destinées au réseau local ou en provenance du réseau local) de cette interface de communication est supérieure ou égale à un seuil prédéterminé de temps d'antenne, alors il est possible de restaurer les capacités de communication de cette interface de communication avec un réseau de communication local.

Selon un mode de réalisation particulier, le procédé comprend en outre : - lorsque ladite configuration de ladite deuxième interface de communication considérée a été modifiée, alors vérifier si ladite congestion est toujours détectée, et lorsque ladite congestion n'est plus détectée, restaurer ladite configuration initiale de ladite deuxième interface de communication considérée.

Avantageusement, lorsque l'interface de communication de la passerelle réseau avec le réseau étendu ne subit plus de congestion, il est possible de rétablir les capacités de communication des interfaces de communication avec un réseau de communication local de la passerelle réseau.

Selon un mode de réalisation particulier, modifier une configuration initiale de ladite deuxième interface de communication considérée comprend : comparer une bande de fréquence sur laquelle opère ladite deuxième interface de communication considérée avec une bande de fréquence sur laquelle opère au moins une autre deuxième interface de communication, et si ladite bande de fréquence sur laquelle opère ladite deuxième interface de communication considérée est supérieure à ladite bande de fréquence sur laquelle opère ladite au moins une autre deuxième interface de communication, alors modifier la configuration initiale de ladite deuxième interface de communication considérée en priorité, sinon modifier une configuration initiale de ladite autre deuxième interface de communication en priorité.

Avantageusement, lorsque plusieurs interfaces de communication avec un réseau de communication local de la passerelle réseau sont connectées à une ou plusieurs stations et qu'en outre il existe un trafic réseau entre ces stations et le réseau étendu *via* ces interfaces de communication avec un réseau de communication local ou qu'un flux de communication existe au sein d'un réseau de communication sans fil mis à disposition par ces interfaces de communication avec un réseau de communication local, alors la réduction des capacités de communication des interfaces de communication avec un réseau de communication local est effectuée selon un mécanisme de priorité prenant en compte la bande de fréquence sur laquelle opère chacune des interfaces de communication avec un réseau de communication local. L'interface de communication avec un réseau de communication local opérant sur la bande de fréquence la plus élevée parmi un ensemble d'interfaces de communication avec un réseau de communication local verra ses capacités de communication réduites en priorité. Il est ainsi possible de réduire la consommation d'énergie de la passerelle réseau en réduisant d'abord les capacités de communication des interfaces de communication avec un réseau de communication local les plus gourmandes en énergie (i.e., celles opérant sur les bandes de fréquence les plus élevées, par exemple 5GHz et 6GHz).

Selon un mode de réalisation particulier, modifier une configuration initiale de ladite deuxième interface de communication considérée comprend l'une ou l'autre ou une combinaison des modifications suivantes :
- une diminution d'une largeur d'un canal opérationnel de ladite deuxième interface de communication considérée,
- une diminution d'un nombre de chaînes de transmission de ladite deuxième interface de communication considérée,
- une diminution d'un nombre de chaînes de réception de ladite deuxième interface de communication considérée,
- une diminution d'une puissance d'émission de ladite deuxième interface de communication considérée.

Il est également proposé ici un module de gestion d'une consommation d'énergie d'au moins une deuxième interface de communication à un réseau de communication local d'une passerelle réseau, ladite passerelle réseau comprenant en outre au moins une première interface de communication avec un réseau de communication étendu. Le module de gestion comprend de la circuiterie électronique configurée pour : sur détection d'une congestion de ladite première interface de communication, déterminer, pour chaque deuxième interface de communication, si au moins une station est connectée à ladite deuxième interface de communication considérée, et, pour ladite deuxième interface de communication considérée à laquelle au moins une station est connectée, détecter un premier flux de communication *via* ladite deuxième interface de communication considérée, entre ledit réseau étendu et ledit réseau local, d'une part, et un deuxième flux de communication, *via* ladite deuxième interface de communication considérée, entre plusieurs stations connectées audit réseau local, d'autre part, puis : soit en présence d'un premier flux de communication *via* ladite deuxième interface de communication considérée, entre ledit réseau étendu et ledit réseau local, ou soit en présence d'un deuxième flux de communication, *via* ladite deuxième interface de communication considérée, entre plusieurs stations connectées audit réseau local, et si le débit dudit deuxième flux de communication est inférieur à un seuil prédéterminé de débit (S1), alors, modifier une configuration initiale de ladite deuxième interface de communication considérée pour diminuer sa consommation d'énergie, et sinon, maintenir sa configuration initiale.

Dans un mode de réalisation particulier, le module de gestion comprend en outre de la circuiterie électronique configurée pour: effectuer une action de gestion d'une consommation d'énergie de ladite deuxième interface de communication considérée, lorsqu'aucune station n'est connectée à ladite deuxième interface de communication considérée.

Selon un mode de réalisation particulier, effectuer ladite action de gestion d'une consommation d'énergie de ladite deuxième interface de communication considérée comprend : éteindre ladite deuxième interface de communication considérée.

Selon un mode de réalisation particulier, le module de gestion comprend en outre de la circuiterie électronique configurée pour : lorsque ladite configuration de ladite deuxième interface de communication considérée a été modifiée, alors vérifier si ladite congestion est toujours détectée, et lorsque ladite congestion est toujours détectée, déterminer si une utilisation d'un temps d'antenne par ladite deuxième interface de communication considérée est supérieure ou égale à un seuil prédéterminé de temps d'antenne, et lorsque ladite utilisation du temps d'antenne par ladite deuxième interface de communication considérée est supérieur ou égale au seuil prédéterminé de temps d'antenne, alors restaurer ladite configuration initiale de ladite deuxième interface de communication considérée.

Selon un mode de réalisation particulier, le module de gestion comprend en outre de la circuiterie électronique configurée pour : lorsque ladite configuration de ladite deuxième interface de communication considérée a été modifiée, alors vérifier si ladite congestion est toujours détectée, et lorsque ladite congestion n'est plus détectée, restaurer ladite configuration initiale de ladite deuxième interface de communication considérée.

Il est également proposé ici une passerelle réseau comprenant au moins une première interface de communication avec un réseau de communication étendu et au moins une deuxième interface de communication à un réseau de communication local. La passerelle réseau comprend un module de gestion tel que décrit précédemment.

Il est aussi proposé ici un produit programme d'ordinateur, comportant des instructions entraînant l'exécution, par un processeur, du procédé tel que décrit ci-dessus, lorsque lesdites instructions sont exécutées par le processeur.

Il est aussi proposé ici un support de stockage, stockant un programme d'ordinateur comportant des instructions entraînant l'exécution, par un processeur, du procédé tel que décrit ci-dessus, lorsque lesdites instructions sont lues et exécutées par le processeur.

### BREVE DESCRIPTION DES DESSINS

Les caractéristiques de la présente divulgation mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un exemple d'environnement d'implémentation du procédé de gestion de la consommation d'énergie des interfaces de communication sans fil d'un dispositif électronique point d'accès de type passerelle réseau selon un mode particulier de réalisation ;
[Fig. 2] illustre schématiquement un exemple d'architecture matérielle d'un dispositif électronique point d'accès de type passerelle réseau selon un mode particulier de réalisation ;
[Fig. 3A] illustre schématiquement un exemple d'architecture matérielle d'une interface de communication sans fil d'un dispositif électronique point d'accès de type passerelle selon un mode particulier de réalisation ;
[Fig. 3B] illustre schématiquement un exemple d'architecture matérielle d'une interface de communication d'un dispositif électronique point d'accès de type passerelle selon un mode particulier de réalisation ;
[Fig. 4] illustre sous forme de diagramme des étapes d'un procédé de gestion de la consommation d'énergie des interfaces de communication sans fil d'un dispositif électronique point d'accès de type passerelle selon un mode particulier de réalisation ;
[Fig.5] illustre sous forme de diagramme d'autres étapes du procédé de gestion de la consommation d'énergie des interfaces de communication sans fil d'un dispositif électronique point d'accès de type passerelle réseau, selon un mode particulier de réalisation ;
[Fig. 6] illustre schématiquement un exemple d'architecture matérielle d'un module de gestion de la consommation d'énergie des interfaces de communication sans fil d'un dispositif électronique point d'accès de type passerelle réseau, configuré pour exécuter tout ou partie des étapes du procédé de gestion des Figs. 4 et 5.

### EXPOSE DETAILLE DE MODES DE REALISATION

Le principe général de l'un ou des modes de réalisation concerne la réduction de la consommation d'énergie d'un dispositif électronique point d'accès, tel qu'une passerelle réseau, *via* la réduction des capacités de communication de ses interfaces de communication de type sans fil, établissant un ou des réseaux de communication locaux sans fil. Plus particulièrement, un objet de la présente divulgation est la réduction des capacités de communication des interfaces de communication sans fil de la passerelle réseau, lorsqu'une congestion est détectée au niveau d'une interface de communication de cette même passerelle lui permettant d'être apte à se connecter avec un réseau étendu large bande ou WAN (« *Wide Area Network* » en anglais).

Une congestion, ou encombrement, d'un réseau de communication est la réduction de la qualité de service qui se produit lorsqu'un nœud ou une liaison du réseau transporte plus de données qu'il ne peut en traiter. Les effets typiques sont des retards dans le traitement des paquets qui s'accumulent dans les files d'attente, des pertes de paquets, une diminution du débit ou le blocage de nouvelles connexions. Il existe différentes solutions permettant de détecter une telle congestion et d'y remédier.

La demande de commentaires RFC 9330 de l'IETF (acronyme de « *Internet Engineering Task Force* » en anglais) introduit la technologie dite « faible latence, faible perte et débit évolutif » ou en anglais « *Low Latency, Low Loss, and Scalable Throughput* » (aussi connue sous l'acronyme « L4S »). La technologie L4S fonctionne comme un mécanisme de contrôle de la congestion en fournissant un retour d'information sur la congestion des goulets d'étranglement du réseau aux applications utilisées. Pour cela, cette technologie L4S utilise un mécanisme de notification explicite de la congestion (ou « *Explicit Congestion Notification* » en anglais ou « ECN ») pour donner un avertissement précoce de la congestion au niveau de la liaison correspondant à un « goulot d'étranglement » (ou « *bottleneck* » en anglais) en marquant un point de code « *Congestion Experienced* » (ou « CE ») dans l'entête IP des paquets. Après avoir reçu les paquets, le récepteur renvoie ces informations de congestion à l'expéditeur dans les paquets d'accusés de réception (« *Acknowledgment* » en anglais ou ACK) du protocole de transport. L'expéditeur utilise ce retour d'informations sur la congestion pour réduire son taux d'envoi de paquets afin d'éviter les retards au niveau du goulot d'étranglement.

Selon une autre solution, lorsqu'une congestion est détectée au niveau d'une interface aérienne du réseau d'accès radio d'un réseau cellulaire (ou « *Radio Access Network* » en anglais ou RAN) (e.g., *via* la surveillance d'indicateurs et métriques pour surveiller la charge de trafic et la qualité de service sur l'interface aérienne et le réseau de transport), le cœur de réseau d'une réseau cellulaire peut envoyer des notifications aux équipements utilisateurs (« *User Equipment* » en anglais ou UE) tels que les passerelles réseaux équipées d'un UE pour l'accès au réseau étendu («*Wide Area Network*» ou WAN, typiquement considéré comme l'accès Internet), afin de limiter leur débit maximum agrégé (ou « *Aggregated Maximum Bit Rate* » en anglais ou « AMBR »).

Par la suite, il est entendu par « interfaces radios » des interfaces de communication de type sans fil configurées pour établir des réseaux de communication locaux de type sans fil ou WLAN (de l'anglais « *Wireless Local Area Network* ») *via* lesquelles des stations peuvent se connecter entre elles et/ou accéder, *via* la passerelle réseau, à un réseau de communication de type étendu large bande ou WAN (« *Wide Area Network »* en anglais ou « WAN »). De tels interfaces radios sont également appelées interfaces radios WLAN. L'accès au réseau étendu WAN est possible *via* une ou plusieurs interfaces de communication permettant à la passerelle réseau d'être apte à se connecter au réseau étendu WAN. De telles interfaces de communication sont appelées par la suite « interfaces de communication WAN ». Il est à noter que l'interface de communication WAN peut être de type interface de communication sans fil.

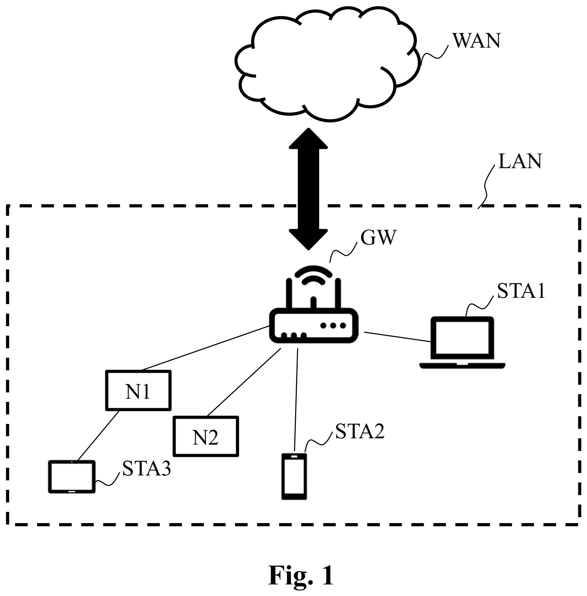

La **Fig. 1** illustre ainsi schématiquement un exemple d'environnement d'implémentation d'un procédé de gestion de la consommation d'énergie d'une ou plusieurs interfaces radios WLAN d'un dispositif électronique point d'accès de type passerelle réseau, selon un mode particulier de réalisation.

La Fig. 1 présente un premier réseau de communication de type local ou LAN (« *Local Area Network* » en anglais ou « LAN »), noté LAN et appelé par la suite réseau local LAN. Ce réseau local LAN comprend un dispositif électronique point d'accès, ici de type passerelle de communication réseau, noté GW. La passerelle réseau GW est configurée pour opérer principalement, mais non exclusivement, des fonctions de lien et d'interface de communication entre le réseau local LAN et un deuxième réseau de communication de type étendu large bande ou WAN (« *Wide Area Network »* en anglais ou « WAN »), noté WAN et appelé par la suite réseau étendu WAN. Un tel réseau étendu WAN est, par exemple, un réseau Internet. Pour cela, la passerelle réseau GW comprend une ou plusieurs interfaces de communication WAN lui permettant d'être apte à se connecter au réseau étendu WAN par exemple *via* une liaison filaire (ADSL ou fibre), ou encore par une liaison sans fil radio (de type cellulaire, e.g. 2G à 5G telle que spécifié par l'un des standards issus de la coopération du « *3rd Generation Partnership Project* » ou « 3GPP »).

Le réseau local LAN comprend en outre un ensemble de stations telles que : des dispositifs utilisateurs STA1, STA2, STA3 (e.g., un ordinateur personnel STA1, un téléphone intelligent STA2, une tablette STA3) et un ou plusieurs dispositifs électroniques points d'accès formant un système d'extension de couverture de communication sans-fil (par exemple : extenders Wi-Fi, répéteurs sans-fil, etc., non représentés). Ce système d'extension de couverture de communication sans-fil coordonne plusieurs points d'accès intégrés à des nœuds de communication notés N1 et N2. Ces différents points d'accès sont interconnectés grâce à un sous-réseau d'acheminement ou d'amenée (« *backhaul subnetwork* » en anglais).

Ces points d'accès permettent tous l'accès au réseau local LAN à d'autres stations, comme par exemple le dispositif utilisateur STA3. Les points d'accès N1 et N2 peuvent être connectés à la passerelle réseau GW par liaison filaire ou par liaison radio sans fil pour l'accès au réseau étendu WAN.

Les dispositifs utilisateurs STA1, STA2, STA3 peuvent être connectés directement à la passerelle réseau GW ou *via* l'un des points d'accès situés dans les nœuds de communication N1, ou N2 (comme représentés sur la Fig. 1). La connexion avec la passerelle réseau GW ou les points d'accès situés dans les nœuds de communication N1, N2 peut se faire par liaison filaire (par exemple de type Ethernet), ou par d'autres types de connexion comme par exemple USB, liaison sans fil (par exemple de type : Wi-Fi, Bluetooth, Bluetooth Low Energy, Zwave, Zigbee, DECT-ULE...etc.).

La passerelle réseau GW comprend ainsi des interfaces de communications sans fil, ou interfaces radios WLAN, afin d'être apte à établir un ou des réseaux de communication sans fil locaux, de type WLAN (de l'anglais « *Wireless Local Area Network* ») et appelé par la suite réseau local sans fil WLAN (non représentés sur la Fig. 1). De tels réseaux locaux sans fil WLAN utilisent, par exemple, la technologie ou standard 802.11 dans l'une de ses versions, telles que 802.11-2012, 802.11-2016 ou 802.11-2020, avec l'un ou plusieurs de ces amendements tels que 802.11n-2009, 802.11ac-2013, 802.11ax-2021, ou la version provisoire de l'amendement P802.11be dans son édition D7.0. Ces interfaces radios sont configurées pour opérer des communications sans fil bidirectionnelles entre une ou plusieurs stations compatibles et un ou des réseaux de communication local sans fil de type WLAN (non représenté sur la Fig. 1) prolongeant ainsi le réseau local LAN. Certaines de ces interfaces radios sont aptes à établir des communications sans fil bidirectionnelles selon l'une des versions du standard 802.11 dans l'une ou plusieurs bandes de fréquences parmi les bandes 2.4 GHz, 5 GHz, et 6 GHz.

Par la suite, les dispositifs utilisateurs STA1, STA2, STA3 et les points d'accès situés dans les nœuds de communication N1, N2 sont nommés « stations ». Ainsi, le terme « station » désigne ici tout dispositif électronique et/ou informatique configuré pour être connecté au moins au réseau de communication LAN et, le cas échéant, à un ou des réseaux de communication sans fil WLAN. Autrement dit, ces stations sont aptes à se connecter au réseau local LAN et/ou à un ou des réseaux locaux sans fil WLAN prolongeant le réseau local LAN, en ce qu'elles disposent des autorisations et configurations nécessaires à accéder aux ressources dudit réseau local LAN et/ou aux réseaux locaux sans fil WLAN prolongeant le réseau local LAN. Par la suite, des communications entre stations dans un même réseau local sans fil ou vers un autre réseau local sans fil *via* une interface radio WLAN 201, 202, sont assimilées à des communications entre stations dans le réseau local LAN *via* une interface radio WLAN 201, 202.

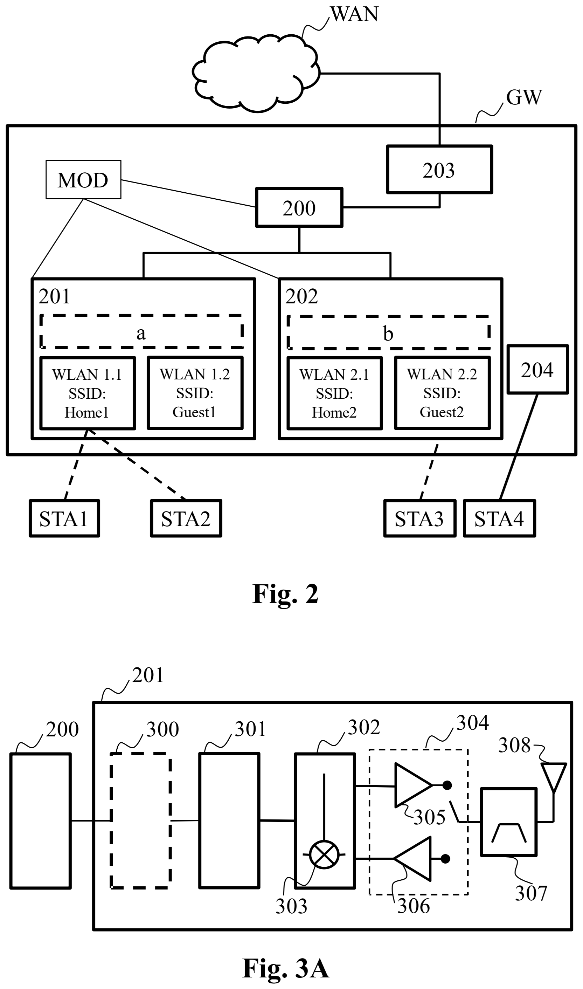

La **Fig. 2** illustre schématiquement un exemple d'architecture matérielle d'un dispositif électronique point d'accès de type passerelle réseau GW selon un mode particulier de réalisation.

La passerelle réseau GW comprend une ou plusieurs interfaces radios WLAN pouvant être indépendamment activée ou désactivée. En particulier, selon l'exemple de la Fig. 2, la passerelle réseau GW comprend une première interface radio WLAN 201, et une deuxième interface radio WLAN 202. Ces première et deuxième interfaces radios WLAN 201 et 202 seront décrites plus en détails par la suite en lien avec la Fig. 3A. Ces première et deuxième interfaces radios WLAN 201 et 202 sont configurées pour fournir aux stations STA1 à STA3 une connectivité sans-fil au réseau local LAN et/ou à un ou des réseaux de communication locaux sans fil WLAN prolongeant le réseau local LAN.

Les canaux respectifs sur lesquels opèrent ces premières et deuxième interfaces radios WLAN 201 et 202 sont les canaux désignés par « a » et « b ». Ces canaux « a » et « b » appartiennent à une bande de fréquence (e.g., 2.4 GHz, 5 GHz, 6 GHz) qui est découpée en plusieurs canaux dits opérationnels sur lesquels elles peuvent opérer. Dans un réseau de type IEEE 802.11, ces canaux font généralement 20 MHz de large et peuvent être agrégés afin d'augmenter la capacité de transmission du canal opérationnel (40 MHz, 80 MHz, 160 MHz voire 320 MHz selon la largeur de spectre disponible dans la bande de fréquence).

Selon un exemple particulier de réalisation, ces première et deuxième interfaces radios WLAN 201 et 202 sont configurées pour fournir un accès à un ou plusieurs réseaux de communication sans fil WLAN distincts. En effet, il est possible d'affecter plusieurs « identifiants de l'ensemble des services » ou SSID (« *Service Set Identifier* » en anglais) sur une seule et même interface radio WLAN (2.4 GHz ou 5 GHz). Le SSID permet aux stations STA1 à STA3 d'identifier et de se connecter à un réseau de communication local sans fil WLAN spécifique. Lorsqu'une station STA1 à STA3 se connecte à un réseau de communication local sans fil WLAN, elle utilise entre autres le SSID pour identifier ce réseau.

Ainsi, selon l'exemple de la Fig. 2, la première interface radio WLAN 201 est configurée pour fournir un accès à deux réseaux de communication sans fil WLAN distincts : un premier réseau de communication sans fil noté WLAN 1.1 dont le SSID est « Home1 » et un deuxième réseau de communication sans fil noté WLAN 1.2 dont le SSID est « Guestl ». De la même manière, la deuxième interface radio WLAN 202 est configurée pour fournir un accès à deux réseaux de communication sans fil WLAN distincts : un premier réseau de communication sans fil noté WLAN 2.1 dont le SSID est « Home2 » et un deuxième réseau de communication sans fil noté WLAN 2.2 dont le SSID est « Guest2 ». Dans l'exemple de la Fig. 2, les stations STA1 et STA2 sont connectées, *via* une connexion sans fil de type Wi-Fi, au premier réseau de communication sans fil WLAN 1.1 fourni par la première interface radio WLAN 201 et la station STA3 est connectée, *via* une connexion sans fil de type Wi-Fi, au deuxième réseau de communication sans fil WLAN 2.2 fourni par la deuxième interface radio WLAN 202.

La passerelle réseau GW comprend également une interface de communication 203 pour l'accès au réseau étendu WAN, dite « interface de communication WAN 203 ». Cette interface de communication WAN 203 est configurée pour opérer des communications bidirectionnelles entre la passerelle réseau GW et le réseau étendu WAN. Cette interface de communication WAN 203 est, par exemple, une interface de communication sans fil, ou interface radio, permettant à la passerelle réseau GW de se connecter à un réseau étendu WAN de type réseau cellulaire d'un opérateur, *via* une liaison sans fil radio de type 2G à 5G.

La passerelle réseau GW comporte en outre un processeur 200 configuré pour contrôler les fonctionnalités de la passerelle réseau GW et gérer les différentes interfaces radios WLAN 201 et 202, et l'interface de communication WAN 203. Le processeur 200 est notamment configuré pour gérer les flux de données entre les interfaces radios WLAN 201 et 202 et l'interface de communication WAN 203.

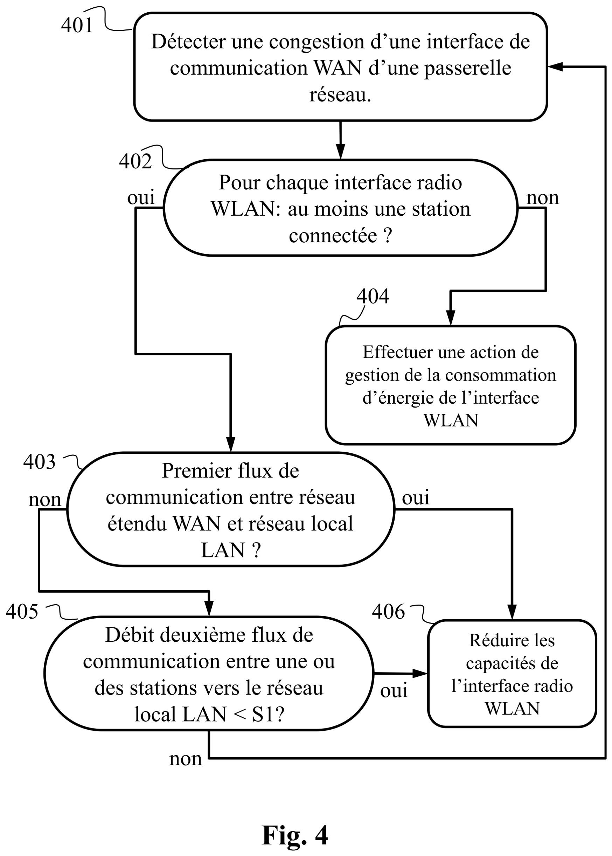

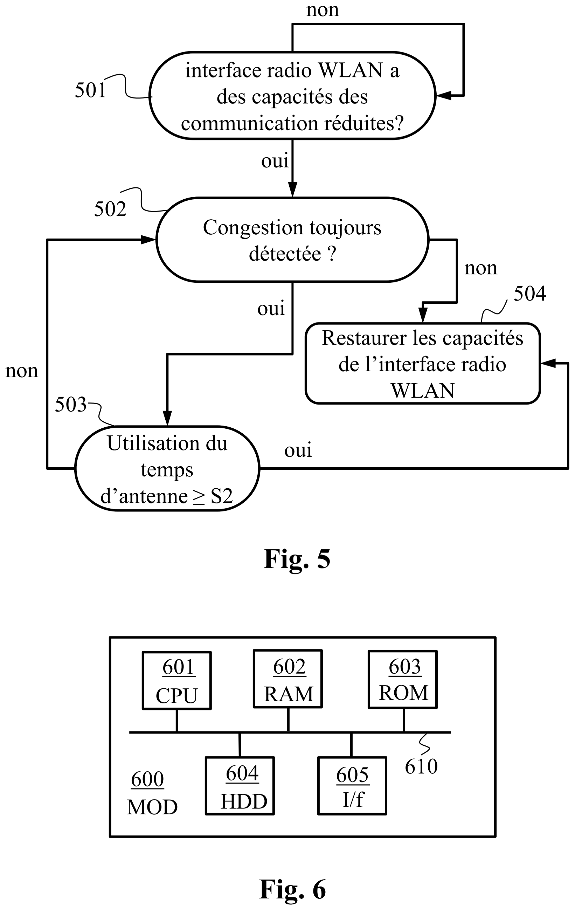

La passerelle réseau GW comprend en outre, un module de gestion de la consommation d'énergie des interfaces radios WLAN de la passerelle réseau GW (aussi appelé par la suite module de gestion), noté MOD. Un exemple d'architecture matérielle de ce module de gestion MOD est décrit par la suite en lien avec la Fig. 6. Le module de gestion MOD est configuré pour implémenter tout ou partie du procédé de gestion de la consommation d'énergie des interfaces radios WLAN de la passerelle réseau GW décrit ci-après en lien avec les Figs. 4 et 5.

Selon l'exemple de la Fig. 2, la passerelle réseau GW comprend en outre une autre interface de communication 204 configurée pour fournir aux stations compatibles une connectivité filaire (e.g., Ethernet) au réseau local LAN. Dans l'exemple de la Fig. 2 une station STA4 est connectée de manière filaire à cette autre interface de communication 204.

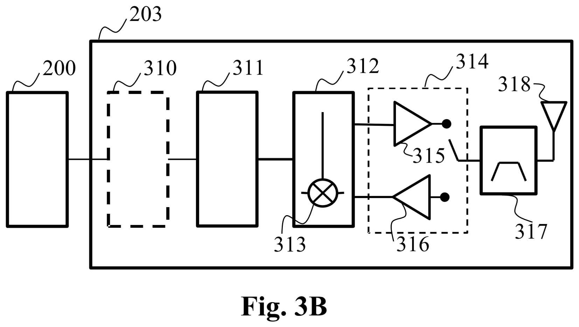

Les **Fig. 3A** et **Fig. 3B** illustrent de manière schématique respectivement un exemple d'architecture matérielle d'une interface radio WLAN d'un dispositif électronique point d'accès de type passerelle réseau GW selon un mode particulier de réalisation et un exemple d'architecture matérielle d'une interface de communication WAN d'un dispositif électronique point d'accès de type passerelle réseau GW selon un mode particulier de réalisation.

Selon l'exemple de la **Fig. 3A****,** la première interface radio WLAN 201 (ou la deuxième interface radio WLAN 202), de la passerelle réseau GW est contrôlée par l'intermédiaire du processeur 200. La première interface radio WLAN 201 comprend, optionnellement, un processeur propre 300 et un processeur numérique de traitement de signal 301 communément appelé « DSP » (« *Digital Signal Processor* » en anglais). Ce dernier comporte un convertisseur numérique/analogique sur la voie de transmission et un convertisseur analogique/numérique sur la voie de réception. Il est à noter que ce processeur propre 300 de la première interface radio WLAN 201 peut être optionnel en tant que composant distinct en fonction de l'implémentation. En effet, selon certains modes de réalisation, ses fonctionnalités peuvent être intégrées avec d'autres composants, comme le processeur 200.

Les signaux analogiques en transmission, respectivement en réception, sont modulés, respectivement démodulés, par un modem radiofréquences 302 comprenant un mélangeur 303. Un module frontal (« *front-end* » en anglais) 304 amplifie le signal en transmission (amplificateur de puissance 305), tandis que le signal en réception est amplifié par un bloc-convertisseur à faible bruit 306. Un filtre 307 commutable entre la voie de transmission et la voie de réception s'intercale entre la sortie de l'amplificateur de puissance 305 et l'antenne 308 d'une part et l'entrée du bloc-convertisseur à faible bruit 306 et l'antenne 308 d'autre part.

Le mode de réalisation selon la **Fig. 3A** illustre le cas où la première interface radio WLAN 201 (ou la deuxième interface radio WLAN 202) comprend une seule chaine de transmission/réception, cependant une interface radio peut comporter plusieurs chaines de transmission/réception. Certains composants peuvent être communs à plusieurs chaînes, par exemple le processeur 300 ou le processeur numérique de traitement de signal 301.

Selon l'exemple de la **Fig. 3B****,** à l'instar de la première interface radio WLAN 201 (ou la deuxième interface radio WLAN 202), l'interface de communication WAN 203 de la passerelle réseau GW est contrôlée par l'intermédiaire du processeur 200. L'interface de communication WAN 203 comprend, optionnellement, un processeur propre 310 et un processeur numérique de traitement de signal 311 communément appelé « DSP » (« *Digital Signal Processor* » en anglais). Ce dernier comporte un convertisseur numérique/analogique sur la voie de transmission et un convertisseur analogique/numérique sur la voie de réception. Il est à noter que ce processeur propre 310 de l'interface de communication WAN 203 peut être optionnel en tant que composant distinct en fonction de l'implémentation. En effet, selon certains modes de réalisation, ses fonctionnalités peuvent être intégrées avec d'autres composants, comme le processeur 200.

Les signaux analogiques en transmission, respectivement en réception, sont modulés, respectivement démodulés, par un modem radiofréquences 312 comprenant un mélangeur 313. Un module frontal (« *front-end* » en anglais) 314 amplifie le signal en transmission (amplificateur de puissance 315), tandis que le signal en réception est amplifié par un bloc-convertisseur à faible bruit 316. Un filtre 317 commutable entre la voie de transmission et la voie de réception s'intercale entre la sortie de l'amplificateur de puissance 315 et l'antenne 318 d'une part et l'entrée du bloc-convertisseur à faible bruit 316 et l'antenne 318 d'autre part.

Le mode de réalisation selon la **Fig. 3B** illustre le cas où l'interface de communication WAN 203 comprend une seule chaine de transmission/réception, elle peut comporter plusieurs chaines de transmission/réception. Certains composants peuvent être communs à plusieurs chaînes, par exemple le processeur 310 ou le processeur numérique de traitement de signal 311.

La **Fig. 4** représente sous forme de diagramme les étapes du procédé de gestion de la consommation d'énergie des interfaces radios WLAN 201, 202 selon un mode de réalisation.

Tout ou partie de ce procédé est implémenté par le module de gestion MOD décrit ci-après en lien avec la Fig. 6.

Au cours d'une étape 401, le module de gestion MOD détecte une congestion de l'interface de communication WAN 203 de la passerelle réseau GW. Cette congestion de l'interface de communication WAN 203 correspond au fait que cette interface de communication WAN 203 transporte plus de données qu'elle ne peut en traiter. Autrement dit, elle subit des retards dans les files d'attente et/ou des pertes de paquets, etc.

Pour cela, le module de gestion MOD obtient une information dite « information de congestion » selon laquelle l'interface de communication WAN 203 de la passerelle réseau GW subit une congestion.

Selon un mode de réalisation, lorsque l'interface de communication WAN 203 de la passerelle réseau GW utilise une liaison sans-fil cellulaire haut débit (de type 4G à 5G) et qu'une congestion de ladite interface de communication est détectée, cette congestion est alors annoncée auprès de la passerelle réseau GW, par exemple *via* l'envoi, par une entité du réseau cellulaire, à la passerelle réseau GW d'une notification de réduction de la valeur de l'AMBR par le cœur du réseau par rapport à la valeur habituellement reçue par le cœur du réseau (valeur qui peut être définie par exemple par moyennage dans le temps (e.g., sur une journée, sur une semaine, ...) des valeurs AMBR précédemment reçues). Selon cet exemple, l'information de congestion peut donc être obtenue par le module de gestion MOD à partir de la notification de réduction de la valeur de l'AMBR envoyée par le cœur de réseau à la passerelle réseau GW. Plus particulièrement, de manière classique, le processeur 200 de la passerelle réseau GW reçoit la notification de réduction de la valeur de l'AMBR *via* un module de gestion configuré pour gérer l'interface de communication WAN 203. Ainsi, selon un mode de réalisation, cette notification est ensuite transférée par le processeur 200 au module de gestion MOD qui détecte alors qu'une congestion de l'interface de communication WAN 203 est présente. Il est à noter que dans cet exemple, il est considéré que l'interface de communication WAN de la passerelle réseau GW est de type radio (e.g., 4G ou 5G) et est donc compatible avec la réception de notifications de réduction de la valeur de l'AMBR. Dans un exemple, l'interface de communication WAN 203 de la passerelle réseau GW reçoit du réseau cellulaire la notification de réduction de la valeur de l'AMBR lors de la réception par la passerelle réseau GW d'une requête d'établissement du contexte de l'équipement utilisateur ou « *UE context setup request* » comprenant un paramètre indiquant la valeur de l'AMBR. Dans un autre exemple, cette notification de réduction de la valeur de l'AMBR est reçue par la passerelle réseau GW à travers un message, provenant du réseau cellulaire, d'une requête de création d'un canal logique de communication pour un service donnée ou *« bearer setup request »* en anglais. Encore dans un autre exemple, un message de *type « RRC Connection Reconfiguration* », pour modifier un « *UE contexte* » ou un *« bearer context »,* est utilisé pour notifier de la réduction de la valeur de l'AMBR. Ce message peut en outre comprendre certains autres paramètres de qualité de service ou Quality of Service « QoS » en anglais, tels que le paramètre *Guaranteed Bit Rate* « GBR », le paramètre *Maximum Bit Rate «* MBR ».

Selon un autre mode de réalisation, alternativement ou additionnellement, l'obtention de l'information de congestion est réalisée à partir d'une analyse des entêtes IP des paquets à destination d'une station connectée au réseau de communication local sans fil WLAN. Plus particulièrement, le module de gestion MOD obtient l'information de congestion après avoir analysé les entêtes IP des paquets à destination des interfaces radios WLAN 201 et 202. Cette analyse comprend notamment : réceptionner des paquets en provenance du réseau étendu WAN et à destination d'une station connectée au réseau de communication local sans fil WLAN, et détecter qu'une entête IP des paquets comprend un point de code « *Congestion Experienced »* (ou CE).

Dans une variante, le module de gestion MOD obtient l'information de congestion à partir d'une notification de congestion indiquant que l'interface de communication WAN 203 subit une congestion. Cette notification de congestion est transmise au module de gestion MOD, par exemple, par un module dit « module de congestion » de la passerelle réseau GW configuré pour analyser les entêtes IP des paquets à destination des interfaces radios WLAN 201 et 202.

En effet, lorsque la passerelle réseau GW est compatible avec la technologie L4S décrite précédemment, celle-ci, peut, le cas échéant, marquer les entêtes IP de tous les paquets en provenance du réseau étendu WAN et à destination de toutes les stations connectées dans le réseau de communication local LAN *via* le mécanisme L4S pour indiquer une congestion au cas où certaines de ces stations seraient compatibles avec ce mécanisme L4S. Les stations compatibles se chargeront alors de réduire d'elles même les quantités d'informations à transmettre afin de privilégier les flux critiques uniquement.

En conséquent, lorsqu'une congestion de l'interface de communication WAN 203 est détectée, il peut être avantageux de réduire les capacités des interfaces radios WLAN 201 et 202 afin d'économiser de l'énergie. En effet, puisque l'interface de communication WAN 203 est limitée temporairement en termes de capacités de communication du fait de la congestion, il n'est alors pas nécessaire de faire fonctionner les interfaces radios WLAN 201 et 202 au maximum de leurs capacités de communication. Bien souvent, les capacités de communication au sein du réseau local LAN sont supérieures aux capacités de communication du réseau étendu WAN (débit maximal théorique atteignable).

Au cours d'une étape 402, en cas de congestion de l'interface de communication WAN 203 (i.e., le module de gestion MOD a obtenu une information de congestion), pour chaque interface radio WLAN 201 et 202, le module de gestion MOD détermine si au moins une station est connectée à l'interface radio WLAN 201, 202 concernée.

Selon un exemple de réalisation, le module de gestion MOD détermine si au moins une station est connectée à l'interface radio WLAN 201, 202 concernée en détectant lui-même si au moins une station est connectée à ladite interface radio WLAN 201 ou 202. Dans une variante de réalisation, le module de gestion MOD détermine si au moins une station est connectée à l'interface radio WLAN 201, 202 concernée en réceptionnant une notification de connexion. Cette notification de connexion indique si une, ou plusieurs stations sont connectées à ladite interface radio WLAN 201 ou 202 ou si aucune station n'est connectée à ladite interface radio WLAN 201 ou 202. Le module de gestion MOD reçoit cette notification de connexion d'un module dit « module de connexion » de la passerelle GW configuré pour déterminer si des stations sont connectées à ladite interface radio WLAN 201 ou 202, par exemple.

Si aucune station n'est connectée à l'interface radio WLAN 201, 202 considérée (réponse « non » à l'issue de l'étape 402), le module de gestion MOD entreprend, dans l'étape 404, une action vis-à-vis de l'interface radio WLAN 201, 202 en question. Avantageusement cette action entreprise, dite « action de gestion de la consommation d'énergie », est en rapport avec la consommation d'énergie de l'interface radio WLAN 201, 202.

Dans un mode de réalisation préféré, si aucune station n'est connectée à l'interface radio WLAN 201, 202 considérée (réponse « non » à l'issue de l'étape 402), l'action de gestion de la consommation d'énergie entreprise par le module de gestion MOD est d'éteindre (étape 404) l'interface radio WLAN 201, 202 en question. Pour cela, le module de gestion MOD transmet à l'interface radio WLAN 201, 202 concernée un premier message dit « message d'extinction » indiquant qu'elle doit s'éteindre.

Dans un autre mode de réalisation, si aucune station n'est connectée à l'interface radio WLAN 201, 202 considérée (réponse « non » à l'issue de l'étape 402), l'action de gestion de la consommation d'énergie entreprise par le module de gestion MOD est une combinaison d'une ou plusieurs des réductions de capacités telles que décrites en connexion avec l'étape 406 décrite ci-après, comme par exemple :
- réduire la largeur du canal opérationnel de l'interface radio WLAN 201, 202,
- réduire le nombre de chaînes de transmission de l'interface radio WLAN 201, 202,
- réduire nombre de chaînes de réception de l'interface radio WLAN 201, 202,
- réduire la puissance d'émission globale de l'interface radio WLAN 201, 202,
- d'augmenter la périodicité d'envoi des trames de balises « *beacon frame* »*.*

Dans un autre mode de réalisation, si aucune station n'est connectée à l'interface radio WLAN 201, 202 considérée (réponse « non » à l'issue de l'étape 402), l'action entreprise après cette première itération par le module de gestion MOD est de réitérer, avec ou sans temporisation, la détection d'une congestion de l'interface via l'étape 401. Si à l'issue de cette nouvelle itération des étapes de la fig. 4, une congestion est de nouveau détectée, alors une ou plusieurs actions en relation avec la consommation d'énergie de l'interface radio WLAN 201, 202 peut être entreprise. Avantageusement, la première itération permet de ne pas entreprendre d'action lorsque la congestion détectée a été brève et que celle-ci n'est plus détectée lors de la seconde itération.

Sur détection d'une congestion, le module de congestion MOD vérifie si la congestion est toujours présente.

Pour cela, selon un mode de réalisation, le module de gestion MOD vérifie si à l'issue d'une période prédéterminée il détecte toujours la congestion précédemment détectée (i.e., il obtient une nouvelle information de congestion). Ainsi, tant que le module de gestion MOD détecte la congestion, l'extinction de l'interface radio WLAN 201, 202 est maintenue. Au contraire, si à l'issue de la période prédéterminée le module de gestion MOD ne détecte plus de congestion (i.e., il n'obtient pas de nouvelle information de congestion), le mode d'opération nominal de l'interface radio WLAN 201, 202 est rétabli.

Selon un autre mode de réalisation, alternativement ou additionnellement, le module de gestion MOD vérifie s'il a reçu une notification de fin de congestion indiquant que la congestion précédemment détectée est terminée. Dans un exemple, cette notification est émise par le cœur de réseau et est reçue par le processeur 200 de la passerelle réseau GW qui transmet alors cette notification de fin de congestion au module de gestion MOD. Alternativement, ou additionnellement, cette notification de fin de congestion est transmise au module de gestion MOD par un module de congestion de la passerelle réseau GW configuré pour analyser les entêtes IP des paquets à destination des interfaces radios WLAN 201 et 202.

Si au moins une station est connectée à l'interface radio WLAN 201, 202 considérée (réponse « oui » à l'issue de l'étape 402), au cours d'une étape 403, le module de gestion MOD détermine si un premier flux de communication entre l'interface radio WLAN 201, 202 et l'interface de communication WAN 203 de la passerelle réseau GW est présent (i.e. une ou plusieurs stations du réseau local LAN accèdent au réseau étendu WAN). Le terme « flux de communication » s'entend ici du mouvement de paquets de données d'une station à l'autre sur le réseau de communication local LAN et/ou d'une station vers le réseau étendu WAN.

Pour cela, selon un exemple, le module de gestion MOD détecte si un premier flux de communication *via* l'interface radio WLAN 201, 202 entre des stations du réseau local LAN et l'interface de communication WAN 203, pour l'accès au réseau étendu WAN, est présent. Dans une variante, le module de gestion MOD détermine si ce premier flux de communication est présent en réceptionnant une notification de premier flux de communication indiquant une absence ou une présence de ce premier flux de communication. Le module de gestion MOD reçoit cette notification de premier flux de communication d'un module dit « module de premier flux de communication » de la passerelle GW configuré pour déterminer si ce premier flux de communication est présent ou absent.

Si un premier flux de communication est présent (réponse « oui » à l'issue de l'étape 403) alors, au cours d'une étape 406, le module de gestion MOD modifie une configuration de l'interface radio WLAN 201, 202 considérée. Par « configuration » il est entendu la configuration des canaux opérationnels et/ou le nombre de chaînes en transmission/réception de l'interface radio WLAN et/ou la puissance d'émission de l'interface radio WLAN. Cette modification de configuration consiste en la réduction des capacités de communication de l'interface radio WLAN 201, 202 en question, selon l'un ou l'autre ou une combinaison des critères de réduction décrits ci-après. Pour cela, le module de gestion MOD transmet à l'interface radio WLAN 201, 202 concernée un deuxième message dit « message de réduction des capacités de communication » indiquant qu'elle doit réduire ses capacités de communication. Ce deuxième message comprend, par exemple, une indication concernant le ou les critères de réduction à remplir. Cela permet non seulement de réduire la consommation d'énergie de l'interface radio WLAN 201, 202, mais également de remédier au problème de congestion de l'interface de communication WAN 203, en réduisant le trafic réseau arrivant vers cette interface.

S'il n'y a aucun premier flux de communication (réponse « non » à l'issue de l'étape 403), alors, au cours d'une étape 405, le module de gestion MOD détermine s'il existe un deuxième flux de communication *via* l'interface radio 201, 202 considérée, vers le réseau de communication local LAN, par exemple sous la forme de flux de données entre une ou des stations entre elles.

Pour cela, selon un exemple, le module de gestion MOD détecte si un deuxième flux de communication entre une ou des stations entre elles, sur le réseau local LAN *via* l'interface radio WLAN 201, 202 considérée est présent. Dans une variante, le module de gestion MOD détermine s'il existe un deuxième flux de communication *via* l'interface radio 201, 202 considérée vers le réseau de communication local LAN en réceptionnant une notification de deuxième flux de communication indiquant qu'un deuxième flux de communication au sein du réseau local LAN *via* l'interface radio WLAN 201, 202 considérée est présent ou absent. Le module de gestion MOD reçoit cette notification de deuxième flux de communication d'un module dit « module de deuxième flux de communication » de la passerelle GW configuré pour déterminer si un deuxième flux de communication au sein du réseau local LAN *via* l'interface radio WLAN 201, 202 considérée est présent ou absent.

Si un deuxième flux de communication est présent, le module de gestion MOD mesure le débit de ce deuxième flux de communication. Si cette valeur de débit du deuxième flux de communication est inférieure à un premier seuil prédéterminé, dit « seuil » de débit, noté S1 (réponse « oui » à l'issue de l'étape 405), alors le module de gestion MOD modifie la configuration de l'interface radio WLAN 201, 202 en question en réduisant ses capacités de communication au cours de l'étape 406. Ce seuil prédéterminé de débit S1 est par exemple de 50 Mbps transitant dans le réseau de communication local sans fil WLAN *via* une interface radio WLAN 5 GHz avec 4 antennes de transmission et réception dont le débit théorique peut atteindre 4.8 Gbps. Cela permet de supporter une vidéo en résolution 4K et 60fps. Dans un autre exemple, le seuil prédéterminé de débit S1 est de 10 Mbps pour supporter une vidéo en résolution HD ou 20 Mbps pour supporter une vidéo en résolution 4K.

Autrement dit, s'il n'y a aucun deuxième flux de communication mettant en œuvre une interface radio WLAN 201, 202 ou si la valeur de débit du deuxième flux de communication est inférieure au premier seuil prédéterminé S1 (i.e., des paquets transitant *via* ladite interface radio WLAN 201, 202 supporteraient une réduction des capacités de communication de ladite interface radio WLAN 201, 202), alors il est possible de réduire les capacités de communication de ladite interface radio WLAN 201, 202 selon les divers critères de réductions décrits ci-après, afin de limiter la consommation due à cette interface radio WLAN 201, 202, le temps que la congestion ne soit plus détectée (i.e., le temps que le module de gestion n'obtienne pas d'information de congestion à l'issue de la période prédéterminée).

Au contraire, si la valeur de débit du deuxième flux de communication est supérieure ou égale au premier seuil prédéterminé S1 (réponse « non » à l'issue de l'étape 405), alors le module de gestion MOD démarre une temporisation avant de réitérer les étapes du procédé de gestion telles que décrites ci-dessus. Le terme « temporisation » définit une durée minimale à attendre avant de réitérer le procédé de gestion tel que décrit ci-dessus.

Comme évoqué précédemment, la réduction des capacités de communication de l'une ou l'autre des interfaces radios WLAN 201, 202 ou les deux, peut se faire selon l'une ou l'autre ou une combinaison des critères de réduction décrits ci-après.

Il est à noter que si le module de gestion MOD ne détecte pas de congestion de l'interface de communication WAN 203, alors la configuration de l'interface radio WLAN 201, 202 considérée reste inchangée.

Un premier critère de réduction est la diminution de la largeur de canal opérationnelle (e.g., typiquement pour une interface radio opérant sur la bande 5 ou 6 GHz : passer de 160 MHz à 40 MHz, voire 20 MHz). Dans ce cas, la largeur du canal opérationnel en cours d'utilisation par l'interface radio WLAN 201, 202 est diffusée dans une balise en particulier dans un champ de type « élément d'information » ou « *Information Element* » an anglais (e.g., « *VHT Operation element* », « *HE Operation element* », « *EHT Operation element* » ...). En effet, lorsqu'une interface radio est activée, dans un réseau de type IEEE 802.11, elle émet périodiquement des balises (« *beacons* » en anglais) ou à la demande *via* l'émission d'une trame de réponse (« *probe response* » en langue anglaise) si une trame de sollicitation (« *probe request »* en langue anglaise) a été reçue. L'« *Information Element* » indique alors le changement de canal opérationnel à venir. Cet « *Information Element* » comporte un compteur qui se décrémente à chaque balise et lorsqu'il arrive à 0, le changement de canal opérationnel a lieu.

Alternativement, cet « *Information Element* » indiquant le changement de canal opérationnel peut également être émis *via* une trame de gestion ou de management (« *(Robust) Public Action Frame* » telle que définie dans le standard IEEE 802.11-2020) de manière spontanée afin d'avertir les stations sans avoir à attendre qu'elles réceptionnent la balise.

Alternativement, toute modification de cette largeur de canal opérationnelle, à la hausse ou à la baisse, peut se faire de manière classique *via* l'utilisation d'un message de changement de canal étendu (« *Channel Switch Announcement* » en anglais ou CSA) indiquant la nouvelle largeur de canal. En effet, un message de type CSA, tel que défini par la norme IEEE 802.11h, permet à une interface radio d'annoncer qu'elle passe à un nouveau canal avant de commencer à transmettre sur ce canal. Ce message peut être inclus à la balise (avec un décompte indiquant quand le changement de canal opérationnel aura lieu) et/ou envoyé de manière broadcast *via* une trame de management supplémentaire.

Outre la réduction du débit maximum offert (i.e., bande passante) sur ladite interface radio WLAN 201, 202 et donc l'aide à la réduction de la congestion sur l'interface de communication WAN 203, ceci a pour effet de limiter la consommation d'énergie de ladite interface radio WLAN 201, 202 (moins de traitements/calculs à effectuer car moins de données à traiter). Avantageusement, diminuer la bande passante n'a pas d'impact sur la portée d'une interface radio WLAN, notamment en cas de stations un peu éloignées de la passerelle réseau GW. En effet, limiter la bande passante d'un système à puissance globale constante d'émission, permet d'améliorer la puissance de chaque sous-porteuse dans un système de multiplexage par répétition orthogonale de la fréquence (« *Orthogonal Frequency-Division Multiplexing* » en anglais ou OFDM) et donc le rapport signal sur bruit au niveau du récepteur.

Un deuxième critère de réduction est la réduction du nombre de chaînes de transmission (e.g. typiquement pour une interface radio : passer de 4 antennes de transmission à 2 antennes de transmissions, voire une antenne de transmission).Cette réduction du nombre de chaînes de transmission peut se faire, de manière classique, *via* l'utilisation d'un élément d'information (« *Information Element* » en anglais) de type OMI/OMN (« *Operation Modification Indication* » ou « *Operation Modification Notification* » en anglais) tel que défini par l'amendement 802.11ax ou 802.11ac du protocole IEE 802.11. Cet « *Information Element* » de type OMI/OMN indique aux stations le nombre de flux spatiaux (« *spatial stream* » en anglais) maximum supporté en transmission et/ou réception. Il est à noter qu'on ne peut avoir plus de flux spatiaux que d'antennes. Il est ainsi possible pour l'interface radio WLAN dont les capacités de communication sont réduites d'avertir les stations de ces changements qui seront diffusés dans le champ « *Information Element* » de la balise (e.g., champ « *Supported VHT-MCS and NSS Set* » dans l'« *Information Element* » de type « *VHT Operation* »)*.*

Outre la réduction du débit maximum offert sur ladite interface radio WLAN 201, 202 et donc l'aide à la réduction de la congestion sur l'interface de communication 203 WAN, ceci a pour effet de diminuer le nombre d'amplificateurs de puissance 305 à alimenter, un amplificateur de puissance 305 étant associé à une chaîne de transmission, et donc de diminuer la consommation de ladite interface radio WLAN 201, 202 (ces amplificateurs de puissance 305 étant des sources de consommation importantes au sein des modules frontaux 304, surtout sur les bandes hautes 5 GHz/6 GHz).

Un troisième critère de réduction est la réduction du nombre de chaîne de réception, ce qui a pour effet de réduire les opérations de réception (même si elles sont moins couteuses en énergie que les opérations de transmission). Cette réduction du nombre de chaînes de réception peut se faire de la même manière que pour la réduction des chaînes de transmissions décrite ci-dessus.

Toutefois, cette réduction du nombre de chaînes de réception peut provoquer des pertes de connexion de stations un peu éloignées de la passerelle réseau GW car moins de diversité de réception est présente. Selon un mode de réalisation, pour pallier cet inconvénient, cette réduction du nombre de chaînes de réception se fait en fonction du niveau de puissance en réception (ou selon l'acronyme RSSI pour « *Received Signal Strength Indicator* » en anglais) des stations associées à cette interface radio WLAN 201, 202. Par exemple, typiquement en Wi-Fi pour une interface radio WLAN 201, 202 disposant de quatre antennes de réception, si :
- aucune station n'est connectée à ladite interface radio WLAN 201, 202 avec un niveau de puissance en réception inférieure à -75 dBm, alors le nombre d'antennes de réception de ladite interface radio WLAN 201, 202 diminuera à 1,
- aucune station n'est connectée à ladite interface radio WLAN 201, 202 avec un niveau de puissance en réception inférieure à -80 dBm et au moins une station est connectée à ladite interface radio WLAN 201, 202 avec un niveau de puissance en réception compris entre -75 et -80 dBm, alors le nombre d'antennes de réception de ladite interface radio WLAN 201, 202 diminuera à 2,
- au moins une station est connectée à ladite interface radio WLAN 201, 202 avec un niveau de puissance en réception inférieure à -80 dBm, alors le nombre d'antennes de réception de ladite interface radio WLAN 201, 202 n'est pas modifié et reste à quatre.

Un quatrième critère de réduction est la réduction de la puissance d'émission globale de l'interface radio WLAN 201, 202 (e.g. passer de 30 dBm à 23 dBm). Outre la réduction du débit maximum offert sur ladite interface radio WLAN 201, 202 et donc l'aide à la réduction de la congestion sur l'interface de communication WAN203, ceci a pour effet de diminuer le niveau de puissance nécessaire à appliquer aux amplificateurs de puissance 305, un amplificateur de puissance 305 étant associé à une chaîne de transmission, et donc de diminuer la consommation de ladite interface radio WLAN 201, 202 (ces amplificateurs de puissance 305 étant des sources de consommation importantes au sein des modules frontaux 304, surtout sur les bandes hautes 5 GHz/6 GHz).

Selon un mode de réalisation, lorsque le module de gestion MOD doit réduire les capacités de communication d'au moins deux interfaces radio WLAN 201 et 202, alors un mécanisme de priorisation de la réduction des capacités de communication est mis en œuvre. Plus particulièrement, la réduction des capacités de communication d'une interface radio dépend de la bande de fréquence sur laquelle elle opère. En effet, plus la bande de fréquence utilisée par l'interface radio est élevée, plus cette dernière est gourmande en énergie. Par exemple, si la première interface radio WLAN 201 est une interface opérant à 6 GHz, alors elle est plus gourmande en énergie que la deuxième interface radio WLAN 202 opérant à 2,4 GHz. Ainsi, si au moins une station est connectée à chacune des interfaces radios WLAN 201 et 202, alors au cours de l'étape 406, le module de gestion MOD compare tout d'abord les bandes de fréquences utilisées des premières et deuxièmes interfaces radios WLAN 201 et 202 entre elles. Puis, le module de gestion MOD met en œuvre la réduction des capacités de communication d'abord pour l'interface radio dont la bande de fréquence est la plus élevée (e.g., première interface radio opérant à 6 GHz) parmi les interfaces radios WLAN (e.g., deuxième interface radio WLAN 202 opérant à 2,4 GHz). Autrement dit, le module de gestion MOD réduit les capacités de communication des interfaces radios WLAN les plus gourmandes en énergie en priorité par rapport à des interfaces radio WLAN moins gourmandes en énergie.

Il est à noter que la réduction des capacités de communication de l'interface radio opérant sur la bande de fréquence la plus élevée peut être suffisante si un critère d'économie d'énergie (e.g. nombre de Watt à économiser) est associé à ce procédé, et donc qu'il n'y a pas besoin de réduire les capacités de communication des interfaces radios dont la bande de fréquence est plus faible.

La **Fig. 5** illustre sous forme de diagramme d'autres étapes du procédé de gestion de la consommation d'énergie des interfaces radios WLAN 201, 202 de la passerelle réseau GW, selon un mode particulier de réalisation.

En cas de saturation de l'une ou l'autre des premières ou deuxièmes interfaces radios WLAN 201, 202 pendant une période prédéterminée (e.g., du fait d'une réduction trop importante des capacités de communication de ladite interface radio WLAN, sans toutefois mener à son extinction), les capacités de communication de ladite interface radio WLAN 201, 202 sont progressivement restaurées. Il est alors défini un critère de saturation correspondant à un deuxième seuil prédéterminé, noté S2, dit seuil de temps d'antenne ou « *airtime* » en anglais (i.e., la quantité de temps utilisée par une interface radio pour communiquer (transmettre et recevoir) et est exprimée en pourcentage du temps d'observation) à dépasser sur une période d'observation prédéterminée pour restaurer les capacités de communication des interfaces radios WLAN 201, 202.

Par exemple, si les transmissions et/ou réceptions de l'interface radio WLAN 201 ou 202, dont les capacités de communication ont été réduites, sont supérieures au seuil prédéterminé d' « *airtime* » S2, par exemple à 70% du « *airtime* » sur une période d'observation de 5 secondes, alors il peut être judicieux d'annuler l'une ou l'autre ou une combinaison des réductions de capacités de communication précédentes (i.e., réduction du nombre de chaînes de transmission et/ou réception et/ou diminution du canal opérationnel et/ou diminution de la puissance de transmission) jusqu'à ce que ce critère de saturation ne soit plus rempli.

Ainsi, au cours d'une étape 501, le module de gestion MOD détermine, pour chaque interface radio WLAN 201 et 202, si elle a vu ses capacités de communication réduites suite à la détection de la congestion.

Si l'interface radio WLAN 201, 202 en question a des capacités réduites (réponse « oui » à l'issue de l'étape 501), alors, au cours d'une étape 502, le module de gestion MOD vérifie si la congestion détectée est toujours présente. Pour cela, selon un mode de réalisation, le module de gestion MOD vérifie à l'issue d'une période prédéterminée, s'il obtient une nouvelle information de congestion. Si à l'issue de cette période prédéterminée, le module de gestion MOD n'obtient aucune information de congestion (réponse « non » à l'issue de l'étape 502), alors le module de gestion MOD détecte qu'il n'y a plus aucune congestion et la configuration initiale de l'interface radio WLAN 201, 202, qui a été modifiée (i.e., réduction des capacités de communication), est restaurée au cours d'une étape 504. Pour cela, le module de gestion MOD transmet à l'interface radio WLAN 201, 202 concernée, un message de rétablissement de la configuration initiale. Ce message comprend, par exemple, une indication que l'une ou l'autre ou une combinaison des critères de réduction mis en œuvre, doit être annulée.

Selon un autre mode de réalisation, tel que décrit précédemment, alternativement ou additionnellement, le module de gestion MOD vérifie s'il a reçu une notification de fin de congestion indiquant que la congestion précédemment détectée est terminée. Avantageusement, la réception d'une notification de fin de congestion permet de se passer d'un compteur de temps.

Si au contraire le module de gestion MOD obtient, à l'issue de la période prédéterminée, une nouvelle information de congestion, (i.e., il existe toujours une congestion) (réponse « oui » à l'issue de l'étape 502) et/ou s'il reçoit une notification de fin de congestion, alors, au cours d'une étape 503, le module de gestion MOD détermine si le critère de saturation est rempli, c'est-à-dire si l'utilisation du temps d'antenne ou « *airtime* » par l'interface radio WLAN 201, 202 considérée est supérieure ou égale au seuil prédéterminé de temps d'antenne S2.

Si l'utilisation du « airtime » par l'interface radio WLAN 201, 202 considérée est supérieure ou égale au seuil prédéterminé de temps d'antenne S2 (réponse « oui » à l'issue de l'étape 503), alors le module de gestion MOD exécute l'étape 504 et restaure la configuration initiale de l'interface radio WLAN 201, 202.

Si l'utilisation du « airtime » par l'interface radio WLAN 201, 202 considérée est inférieure au seuil prédéterminé du temps d'antenne S2 (réponse « non » à l'issue de l'étape 503), alors le module de gestion MOD réitère l'étape 502.

La **Fig. 6** illustre schématiquement l'architecture matérielle d'un module de gestion MOD configuré pour exécuter tout ou partie des étapes du procédé de gestion illustré dans les Figs. 4 et 5.

Le module de gestion MOD 600 comprend, reliés par un bus de communication 610, un ou plusieurs des éléments suivants : un processeur ou CPU (« *Central Processing Unit* » en anglais) 601 ; une mémoire vive RAM (« *Random Access Memory* » en anglais) 602 ; une mémoire morte ROM (« *Read Only Memory* » en anglais) 603, par exemple une mémoire Flash ; un dispositif de stockage de données, tel qu'un disque dur HDD (« *Hard Disk Drive* » en anglais), ou un lecteur de support de stockage, tel qu'un lecteur de cartes SD (« *Secure Digital* » en anglais) 604 ; au moins une interface de communication I/f 605 permettant au module de gestion MOD 600 d'interagir avec le processeur 200 de la passerelle réseau GW et les interfaces radios WLAN 201 et 202. Dans un mode de réalisation particulier, l'interface de communication I/f 605 permet au module de gestion MOD d'interagir avec un module de congestion et/ou un module de connexion et/ou un module de premier flux de communication et/ou un module de deuxième flux de communication.

Le processeur 601 est capable d'exécuter des instructions chargées dans la RAM 602 à partir de la ROM 603, d'une mémoire externe (non représentée), du dispositif de stockage de données 604, tel qu'une carte SD, ou d'un réseau de communication (non représenté). Lorsque le module de gestion 600 est mis sous tension, le processeur 601 est capable de lire de la RAM 602 des instructions et de les exécuter. Ces instructions forment un programme d'ordinateur causant la mise en œuvre, par le processeur 601, des comportements, étapes et algorithmes décrits ici, en particulier en combinaison avec tout ou partie des étapes des figures 4 et/ou 5.

Tout ou partie des comportements, étapes et algorithme décrits ici peut ainsi être implémenté sous forme logicielle par exécution d'un ensemble d'instructions par une machine programmable, telle qu'un DSP (« *Digital Signal Processor* » en anglais) ou un microcontrôleur, ou être implémenté sous forme matérielle par une machine ou un composant (« *chip* » en anglais) dédié ou un ensemble de composants (« *chipset* » en anglais) dédié, tel qu'un FPGA (« *Field-Programmable Gate Array* » en anglais) ou un ASIC (« *Application-Specific Integrated Circuit* » en anglais). D'une manière générale, le module de gestion 600 comprend de la circuiterie électronique agencée et configurée pour implémenter les comportements, étapes et algorithmes décrits ici.

Il est à noter que le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

## Revendications

1. Procédé de gestion d'une consommation d'énergie d'une passerelle réseau (GW) comprenant au moins une première interface de communication (203) avec un réseau de communication étendu (WAN) et au moins une deuxième interface de communication (201, 202) à un réseau de communication local (LAN), ledit procédé de gestion étant **caractérisé en ce qu'**il comprend :
sur détection (401) d'une congestion de ladite première interface de communication (203), déterminer, pour chaque deuxième interface de communication (201, 202), si au moins une station (STA1, STA2, STA3) est connectée à ladite deuxième interface de communication (201, 202) considérée, et, pour ladite deuxième interface de communication (201, 202) considérée à laquelle au moins une station (STA1, STA2, STA3) est connectée, détecter (403, 405) un premier flux de communication *via* ladite deuxième interface de communication (201, 202) considérée, entre ledit réseau étendu (WAN) et ledit réseau local (LAN), d'une part, et un deuxième flux de communication, *via* ladite deuxième interface de communication (201, 202) considérée, entre plusieurs stations connectées audit réseau local (LAN), d'autre part, puis :
soit en présence d'un premier flux de communication *via* ladite deuxième interface de communication (201, 202) considérée, entre ledit réseau étendu (WAN) et ledit réseau local (LAN), ou soit en présence d'un deuxième flux de communication, *via* ladite deuxième interface de communication (201, 202) considérée, entre plusieurs stations connectées audit réseau local (LAN), et si le débit dudit deuxième flux de communication est inférieur à un seuil prédéterminé de débit (S1), alors modifier (406) une configuration initiale de ladite deuxième interface de communication (201, 202) considérée pour diminuer sa consommation d'énergie, et sinon, maintenir sa configuration initiale.

2. Procédé selon la revendication 1, comprenant en outre :
- effectuer une action de gestion d'une consommation d'énergie de ladite deuxième interface de communication (201, 202) considérée, lorsqu'aucune station (STA1, STA2, STA3) n'est connectée à ladite deuxième interface de communication (201, 202) considérée.

3. Procédé selon la revendication 2, dans lequel effectuer ladite action de gestion d'une consommation d'énergie de ladite deuxième interface de communication (201, 202) considérée comprend : éteindre ladite deuxième interface de communication (201, 202) considérée.

4. Procédé selon l'une quelconque des revendications 1 à 3, comprenant en outre :
- lorsque ladite configuration de ladite deuxième interface de communication (201, 202) considérée a été modifiée, alors vérifier (502) si ladite congestion est toujours détectée, et lorsque ladite congestion est toujours détectée, déterminer (503) si une utilisation d'un temps d'antenne par ladite deuxième interface de communication (201, 202) considérée est supérieure ou égale à un seuil prédéterminé de temps d'antenne (S2), et lorsque ladite utilisation du temps d'antenne par ladite deuxième interface de communication (201, 202) considérée est supérieure ou égale au seuil prédéterminé de temps d'antenne (S2), alors restaurer (504) ladite configuration initiale de ladite deuxième interface de communication (201, 202) considérée.

5. Procédé selon l'une quelconque des revendications 1 à 4, comprenant en outre :
- lorsque ladite configuration de ladite deuxième interface de communication (201, 202) considérée a été modifiée, alors vérifier (502) si ladite congestion est toujours détectée, et lorsque ladite congestion n'est plus détectée, restaurer (504) ladite configuration initiale de ladite deuxième interface de communication (201, 202) considérée.

6. Procédé selon l'une quelconque des revendications 1 à 5, dans lequel, modifier une configuration initiale de ladite deuxième interface de communication (201,202) considérée comprend :
- comparer une bande de fréquence sur laquelle opère ladite deuxième interface de communication (201, 202) considérée avec une bande de fréquence sur laquelle opère au moins une autre deuxième interface de communication, et si ladite bande de fréquence sur laquelle opère ladite deuxième interface de communication (201, 202) considérée est supérieure à ladite bande de fréquence sur laquelle opère ladite au moins une autre deuxième interface de communication, alors modifier (406) la configuration initiale de ladite deuxième interface de communication (201, 202) considérée en priorité, sinon modifier une configuration initiale de ladite autre deuxième interface de communication en priorité.

7. Procédé selon l'une quelconque des revendications 1 à 6, dans lequel, modifier une configuration initiale de ladite deuxième interface de communication (201,202) considérée comprend l'une ou l'autre ou une combinaison des modifications suivantes :
- une diminution d'une largeur d'un canal opérationnel de ladite deuxième interface de communication (201, 202) considérée,
- une diminution d'un nombre de chaînes de transmission de ladite deuxième interface de communication (201, 202) considérée,
- une diminution d'un nombre de chaînes de réception de ladite deuxième interface de communication (201, 202) considérée
- une diminution d'une puissance d'émission de ladite deuxième interface de communication (201, 202) considérée.

8. Module de gestion d'une consommation d'énergie d'au moins une deuxième interface de communication (201, 202) à un réseau de communication local (LAN) d'une passerelle réseau (GW), ladite passerelle réseau (GW) comprenant en outre au moins une première interface de communication (203) avec un réseau de communication étendu (WAN), ledit module de gestion (MOD) étant **caractérisé en ce qu'il** comprend de la circuiterie électronique configurée pour :
sur détection d'une congestion de ladite première interface de communication (203), déterminer, pour chaque deuxième interface de communication (201, 202), si au moins une station (STA1, STA2, STA3) est connectée à ladite deuxième interface de communication (201, 202) considérée, et, pour ladite deuxième interface de communication (201, 202) considérée à laquelle au moins une station (STA1, STA2, STA3) est connectée, détecter un premier flux de communication *via* ladite deuxième interface de communication (201, 202) considérée, entre ledit réseau étendu (WAN) et ledit réseau local (LAN), d'une part, et un deuxième flux de communication, *via* ladite deuxième interface de communication (201, 202) considérée, entre plusieurs stations connectées audit réseau local (LAN), d'autre part, puis :
soit en présence d'un premier flux de communication *via* ladite deuxième interface de communication (201, 202) considérée, entre ledit réseau étendu (WAN) et ledit réseau local (LAN), ou soit en présence d'un deuxième flux de communication, *via* ladite deuxième interface de communication (201, 202) considérée, entre plusieurs stations connectées audit réseau local (LAN), et si le débit dudit deuxième flux de communication est inférieur à un seuil prédéterminé de débit (S1), alors, modifier une configuration initiale de ladite deuxième interface de communication (201, 202) considérée pour diminuer sa consommation d'énergie, et sinon, maintenir sa configuration initiale.

9. Module de gestion (MOD) selon la revendication 8, comprenant en outre de la circuiterie électronique configurée pour :
- effectuer une action de gestion d'une consommation d'énergie de ladite deuxième interface de communication (201, 202) considérée, lorsqu'aucune station (STA1, STA2, STA3) n'est connectée à ladite deuxième interface de communication (201, 202) considérée.

10. Module de gestion (MOD) selon la revendication 9, dans lequel effectuer ladite action de gestion d'une consommation d'énergie de ladite deuxième interface de communication (201, 202) considérée comprend : éteindre ladite deuxième interface de communication (201, 202) considérée.

11. Module de gestion (MOD) selon l'une quelconque des revendications 8 à 10, comprenant en outre de la circuiterie électronique configurée pour :
- lorsque ladite configuration de ladite deuxième interface de communication (201, 202) considérée a été modifiée, alors vérifier (502) si ladite congestion est toujours détectée, et lorsque ladite congestion est toujours détectée, déterminer (503) si une utilisation d'un temps d'antenne par ladite deuxième interface de communication (201, 202) considérée est supérieure ou égale à un seuil prédéterminé de temps d'antenne (S2), et lorsque ladite utilisation du temps d'antenne par ladite deuxième interface de communication (201, 202) considérée est supérieure ou égale au seuil prédéterminé de temps d'antenne (S2), alors restaurer (504) ladite configuration initiale de ladite deuxième interface de communication (201, 202) considérée.

12. Module de gestion (MOD) selon l'une des revendications 8 à 11, comprenant en outre de la circuiterie électronique configurée pour :
- lorsque ladite configuration de ladite deuxième interface de communication (201, 202) considérée a été modifiée, alors vérifier (502) si ladite congestion est toujours détectée, et lorsque ladite congestion n'est plus détectée, restaurer (504) ladite configuration initiale de ladite deuxième interface de communication (201, 202) considérée.

13. Passerelle réseau (GW) comprenant au moins une première interface de communication (203) avec un réseau de communication étendu (WAN) et au moins une deuxième interface de communication (201, 202) à un réseau de communication local (LAN), ladite passerelle réseau étant **caractérisée en ce qu'**elle comprend un module de gestion (MOD) selon l'une quelconque des revendications 8 à 12.

14. Produit programme d'ordinateur, comportant des instructions entraînant l'exécution, par un processeur, du procédé selon l'une quelconque des revendications 1 à 7, lorsque lesdites instructions sont exécutées par le processeur.

15. Support de stockage, stockant un programme d'ordinateur comportant des instructions entraînant l'exécution, par un processeur, du procédé selon l'une quelconque des revendications 1 à 7, lorsque lesdites instructions sont lues et exécutées par le processeur.
